(19) Europäisches Patentamt
European Patent Office
Office européen des brevets

(11) **EP 3 719 478 B1**

(12) **FASCICULE DE BREVET EUROPEEN**

(45) Date de publication et mention de la délivrance du brevet:
**16.06.2021 Bulletin 2021/24**

(21) Numéro de dépôt: **20166937.1**

(22) Date de dépôt: **31.03.2020**

(51) Int Cl.:
**G01N 21/45** (2006.01)   **G01N 21/17** (2006.01)
**G01S 7/481** (2006.01)   **G01S 17/89** (2020.01)
**H04N 5/3745** (2011.01)

(54) **CAPTEUR POUR L'ACQUISITION D'UN SIGNAL LUMINEUX MODULÉ À UNE FRÉQUENCE ACOUSTIQUE**

SENSOR FÜR DIE ERFASSUNG EINES MIT EINER AKUSTISCHEN FREQUENZ MODULIERTEN LICHTSIGNALS

SENSOR FOR ACQUIRING A MODULATED LIGHT SIGNAL AT AN ACOUSTIC FREQUENCY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.04.2019 FR 1903526**

(43) Date de publication de la demande:
**07.10.2020 Bulletin 2020/41**

(73) Titulaire: **Commissariat à l'Energie Atomique et aux Energies Alternatives
75015 Paris (FR)**

(72) Inventeur: **VERDANT, Arnaud
38054 GRENOBLE CEDEX 09 (FR)**

(74) Mandataire: **Cabinet Beaumont
4, Place Robert Schuman
B.P. 1529
38025 Grenoble Cedex 1 (FR)**

(56) Documents cités:
**WO-A1-2012/126838     US-A- 4 754 259**

- **PITTER M C ET AL: "Phase-sensitive CMOS photo-circuit array for modulated thermoreflectance measurements", ELECTRONICS LETTERS, IEE STEVENAGE, GB, vol. 39, no. 18, 4 septembre 2003 (2003-09-04), pages 1339-1340, XP006020914, ISSN: 0013-5194, DOI: 10.1049/EL:20030835**
- **ROGER A. LIGHT ET AL: "Highly parallel CMOS lock-in optical sensor array for hyperspectral recording in scanned imaging systems", PROCEEDINGS OF SPIE, vol. 7570, 11 février 2010 (2010-02-11), page 75700U, XP055645227, 1000 20th St. Bellingham WA 98225-6705 USA ISSN: 0277-786X, DOI: 10.1117/12.842083 ISBN: 978-1-5106-2687-4**

**EP 3 719 478 B1**

**Description**

Domaine technique

La présente demande concerne le domaine de l'imagerie acousto-optique, notamment pour des applications médicales. Elle vise plus particulièrement un capteur pour l'acquisition d'un signal lumineux modulé à une fréquence acoustique.

Technique antérieure

Dans un milieu biologique tel qu'un tissu humain ou animal, la lumière visible se propage selon un régime de diffusion. Dans ce régime, les photons empruntent des chemins optiques multiples, de sorte que leurs agencements relatifs sont modifiés tout au long de la propagation de la lumière à travers le milieu. Il est alors impossible, avec un capteur d'images standard, d'acquérir une image fidèle du milieu traversé par la lumière.

Pour remonter à des informations d'absorption localisée dans le milieu, on a déjà proposé des techniques dites d'imagerie acousto-optique, dans lesquelles le milieu observé est éclairé par un faisceau de lumière cohérente, typiquement un faisceau laser, et une partie du milieu observé est soumise à une onde acoustique, typiquement une onde acoustique ultrasonore. La vibration des diffuseurs le long du chemin de propagation de l'onde acoustique, aussi appelé zone de marquage acoustique ou encore colonne acoustique de marquage, module alors la phase des photons diffusés. En sortie du milieu, on retrouve des photons porteurs de la modulation acoustique, appelés photons marqués, correspondant aux photons passés par la zone de marquage acoustique, et des photons non porteurs de la modulation acoustique, appelés photons non marqués, correspondant aux photons qui ne sont pas passés par la zone de marquage acoustique. On fait alors interférer le faisceau lumineux issu du milieu, appelé faisceau objet, avec un faisceau de référence issu de la même source lumineuse mais n'ayant pas traversé le milieu diffusant. Ceci permet de démoduler le faisceau objet et de ramener la pulsation des photons marqués à la fréquence de l'onde acoustique. Un capteur d'images est alors utilisé pour mesurer le signal lumineux modulé à la fréquence acoustique et en déduire des informations quant à l'absorption de la lumière dans la zone de marquage.

Il serait souhaitable de pouvoir disposer d'un capteur pour l'acquisition d'un signal lumineux modulé à une fréquence acoustique, ce capteur palliant tout ou partie des inconvénients des capteurs connus.

L'article de Pitter M. C. et al: "Phase-sensitive CMOS photo-circuit array for modulated thermoreflectance measurements", ELECTRONICS LETTERS, vol. 39, no. 18, 4 septembre 2003, pages 1339-1340, divulgue le préambule de la revendication 1.

Résumé de l'invention

Pour cela, un mode de réalisation prévoit un capteur pour l'acquisition d'un signal lumineux modulé à une fréquence acoustique, comportant une pluralité de pixels comprenant chacun :

- une photodiode ;
- un circuit d'intégration configuré pour, à chaque période du signal lumineux modulé, intégrer un photocourant délivré par la photodiode successivement dans K capacités, avec K entier supérieur ou égal à 2 ; et
- un circuit de détection de phase configuré pour détecter un ordre de franchissement d'un seuil prédéterminé de tension par les K capacités et générer, en fonction de l'ordre détecté, un signal représentatif de la phase du signal lumineux modulé.

Selon un mode de réalisation, dans chaque pixel, le circuit de détection de phase est adapté à détecter le rang de la première des K capacités à franchir le seuil de tension, et à affecter au signal représentatif de la phase du signal lumineux modulé une parmi K valeurs de phase prédéterminées en fonction du rang détecté.

Selon un mode de réalisation, dans chaque pixel, le circuit de détection de phase est adapté à détecter le rang des P premières capacités à franchir le seuil de tension et l'ordre de franchissement du seuil de tension par lesdites P premières capacités, avec P entier supérieur ou égal à 2 et inférieur à K, et à affecter au signal lumineux modulé une parmi $K^P$ valeurs de phase prédéterminées en fonction des rangs et de l'ordre détectés.

Selon un mode de réalisation, K=4.

Selon un mode de réalisation, chaque pixel comprend en outre un circuit d'injection de charges commandé pour, à la fin de chaque période du signal lumineux modulé au cours de laquelle au moins l'une des K capacités franchit le seuil de tension, injecter une même contre charge dans chacune des K capacités du circuit d'intégration.

Selon un mode de réalisation, dans chaque pixel, à chaque période de modulation le photocourant est intégré successivement dans les K capacités dans un ordre sélectionné en fonction d'un signal binaire représentatif d'une séquence de sauts de phase appliquée à un signal de modulation du signal lumineux.

Selon un mode de réalisation, chaque pixel comprend un dispositif de contrôle de phase adapté à réémettre une partie de faisceau lumineux modulé reçu par le pixel, en introduisant dans le faisceau réémis un déphasage fonction de la valeur du signal représentatif de la phase du signal lumineux modulé, généré par le circuit de détection de phase du pixel.

Selon un mode de réalisation, dans chaque pixel, le dispositif de contrôle de phase comprend une couche de cristaux liquides disposée entre des première et deuxième électrodes.

Selon un mode de réalisation, dans chaque pixel, la première électrode du dispositif de contrôle de phase est connectée à un noeud de fourniture du signal représentatif de la phase du signal lumineux modulé, généré par le circuit de détection de phase du pixel.

Selon un mode de réalisation, dans chaque pixel, le signal représentatif de la phase du signal lumineux modulé est adapté, en fonction d'un signal de calibration, par un circuit de compensation.

Selon un mode de réalisation, chaque pixel comporte son propre circuit de compensation.

Selon un mode de réalisation, les pixels du capteur sont répartis en plusieurs sous-ensembles de pixels voisins, un même circuit de compensation étant partagé par tous les pixels d'un même sous-ensemble et des circuits de compensation distincts étant prévus pour des sous-ensembles distincts.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente de façon schématique un exemple d'un système d'imagerie acousto-optique ;

la figure 2 est un diagramme illustrant un exemple de fonctionnement du système de la figure 1 ;

la figure 3 est un diagramme illustrant un autre exemple de fonctionnement du système de la figure 1 ;

la figure 4 représente de façon schématique un autre exemple d'un système d'imagerie acousto-optique ;

la figure 5 est une vue en perspective représentant de façon schématique un exemple de réalisation d'un pixel d'un capteur d'un système d'imagerie acousto-optique ;

la figure 6 est un schéma électrique simplifié d'un exemple d'un mode de réalisation d'un pixel d'un capteur d'un système d'imagerie acousto-optique ;

la figure 7 est un diagramme illustrant le fonctionnement du pixel de la figure 6 ;

la figure 8 est un autre diagramme illustrant le fonctionnement du pixel de la figure 6 ;

la figure 9 est un schéma électrique simplifié d'un autre exemple d'un mode de réalisation d'un pixel d'un capteur d'un système d'imagerie acousto-optique ; et

la figure 10 est un schéma électrique simplifié d'une variante de réalisation d'un pixel d'un capteur d'un système d'imagerie acousto-optique.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les applications d'imagerie pouvant être mises en oeuvre à partir des capteurs décrits n'ont pas été détaillées, les modes de réalisation décrits étant compatibles avec les applications usuelles d'imagerie acousto-optique, dans le domaine médical ou dans d'autres domaines.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures, étant entendu que, en pratique, les dispositifs décrits peuvent être orientés différemment.

Sauf précision contraire, les expressions "environ", "approximativement", "sensiblement", et "de l'ordre de" signifient à 10 % près, de préférence à 5 % près.

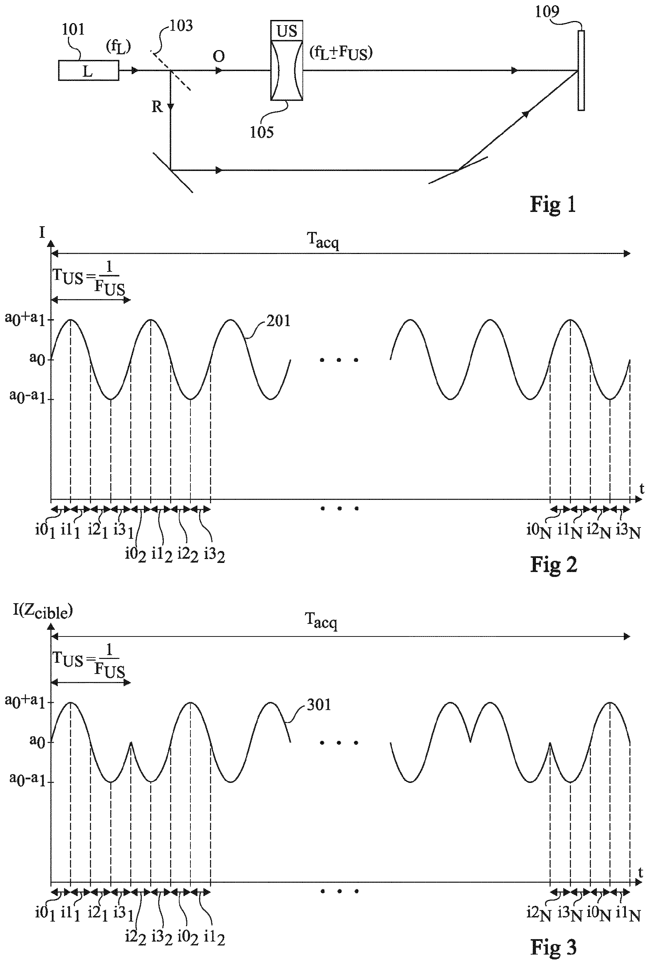

La figure 1 représente de façon schématique un exemple d'un système d'imagerie acousto-optique.

Le système de la figure 1 comprend une source lumineuse 101 (L) adaptée à générer un faisceau lumineux cohérent de fréquence $f_L$, par exemple une source laser. Le système comprend en outre un séparateur 103, par exemple une lame 103 partiellement transparente et partiellement réfléchissante placée à 45 degrés par rapport à la direction d'émission de la source 101, permettant de diviser le faisceau produit par la source 101 en un faisceau objet O et un faisceau de référence R. Le système est agencé de façon que le faisceau objet O illumine un objet ou un échantillon 105 à analyser, et que le faisceau de référence R ne passe pas par l'objet 105. Le faisceau de référence et le faisceau objet réfléchi ou transmis par l'objet 105 sont ensuite projetés sur un capteur d'images 109 comportant une matrice de pixels (non détaillés sur la figure 1), de manière à produire une figure d'interférence dans le plan d'acquisition du capteur.

Dans le système de la figure 1, une partie de l'objet ou échantillon 105 est excitée par une onde acoustique sinusoïdale de fréquence $F_{US}$, par exemple comprise entre 1 et 15 MHz. Il en résulte que la fréquence des rayons du faisceau objet passant par la partie excitée de l'échantillon est décalée à la valeur $F_L + F_{US}$ ou $f_L - F_{US}$, alors que la fréquence des rayons du faisceau objet passant par les parties non-excitées de l'échantillon reste à la valeur $f_L$. Ce décalage fréquentiel permet de "marquer" les photons du faisceau objet passés par la partie excitée de l'échantillon, appelée zone de marquage, par rapport aux autres photons du faisceau objet. On cherche alors à mesurer l'énergie portée par les photons marqués, pour en déduire des informations quant à l'absorption lumineuse dans la zone de marquage.

La figure 2 est un diagramme illustrant plus en détail le principe de fonctionnement du système de la figure 1.

Le diagramme de la figure 2 comprend une courbe 201 représentant l'évolution en fonction du temps t (en abscisse) de l'intensité lumineuse I (en ordonnée) reçue par un pixel du capteur 109 du système de la figure 1, lorsque le capteur 109 est éclairé par le faisceau objet et le faisceau de référence combinés.

En fonctionnement, le capteur 109 voit une figure d'interférence présentant une fréquence de battement égale à la fréquence de modulation acoustique $F_{US}$. Ainsi, comme cela apparaît sur la figure 2, l'intensité I reçue par chaque pixel évolue de façon sinusoïdale autour d'une valeur moyenne ou composante continue $a_0$, avec une amplitude de crête de valeur $a_1$, à une fréquence égale à la fréquence de modulation acoustique $F_{US}$ du système. Les intensités lumineuses reçues par différents pixels du capteur 109 peuvent avoir des composantes continues $a_0$ distinctes et/ou des amplitudes $a_1$ distinctes, mais fluctuent toutes de façon sinusoïdale à la fréquence de battement $F_{US}$, avec des déphasages propres.

Chaque pixel du capteur 109 comprend une photodiode fournissant un courant représentatif de l'intensité lumineuse reçue par le pixel.

Dans cet exemple, la mesure de la partie marquée du faisceau objet s'effectue pendant une période d'acquisition $T_{acq}$ de durée $N*T_{US}$, où $T_{US}$ désigne la période de modulation acoustique du système, égale à $1/F_{US}$, et où N est un entier, supérieur ou égal à 1, par exemple compris entre 100 et 10000.

Chaque pixel comprend un circuit d'intégration configuré pour, à chaque période de modulation acoustique $T_{US}$ de la période d'acquisition $T_{acq}$, intégrer le photocourant délivré par la photodiode successivement dans K=4 capacités C0, C1, C2 et C3 distinctes (non visibles sur la figure 2). Ce cycle d'intégration et d'échantillonnage à quatre phases est répété successivement N fois pendant la période $T_{acq}$, étant entendu que les capacités d'intégration C0, C1, C2 et C3 du pixel ne sont pas réinitialisées entre le début et la fin de la période $T_{acq}$. L'accumulation des échantillons sur un nombre N élevé de périodes du signal de modulation acoustique permet d'améliorer le rapport signal sur bruit de la mesure. Le nombre N est de préférence choisi de façon que la durée de la phase d'acquisition $T_{acq}$ reste inférieure à une durée caractéristique de décorrélation du milieu, par exemple comprise entre 0,1 et 5 ms, par exemple de l'ordre de 1 ms, correspondant au temps au-delà duquel l'amplitude et la phase du signal mesuré risquent de varier du fait de variations physiologiques du milieu observé (par exemple du fait d'un mouvement de plaquettes sanguines).

Sur la figure 2, pour chacune des N périodes $T_{US}$ de la phase d'acquisition $T_{acq}$, on a désigné par les références $i0_j$, $i1_j$, $i2_j$ et $i3_j$, les quatre périodes d'intégration successives du photocourant fourni par la photodiode du pixel, respectivement dans les quatre capacités C0, C1, C2 et C3 du pixel, où j est un entier allant de 1 à N désignant le rang de la période de modulation acoustique $T_{US}$ considérée dans la phase d'acquisition $T_{acq}$. Dans cet exemple, les périodes d'intégration $i0_j$, $i1_j$, $i2_j$ et $i3_j$ ont toutes sensiblement la même durée, de l'ordre de $T_{US}/4$.

A la fin de la phase d'acquisition $T_{acq}$, chaque pixel du capteur fournit quatre valeurs I0, I1, I2 et I3 représentatives respectivement des tensions aux bornes des capacités C0, C1, C2 et C3 du pixel.

A partir de ces quatre valeurs, le champ complexe $E_{OM}$ de la partie du faisceau objet marquée par la modulation acoustique peut être déterminé, pour chaque pixel du capteur, par la formule $E_{OM}$ = (I0-I2) + j(I1-I3). La composante I0-I2 correspond à la partie réelle du champ $E_{OM}$, et la composante I1-I3 correspond à la partie imaginaire du champ $E_{OM}$. La phase $P_{OM}$ et l'amplitude $A_{OM}$ du faisceau objet marqué reçu par chaque pixel du capteur peuvent être déterminées par les formules suivantes :

[Math 1]

$$P_{OM} = \arctan(\frac{I1 - I3}{I0 - I2})$$

et

[Math 2]

$$A_{OM} = \sqrt{(I0 - I2)^2 + (I1 - I3)^2}$$

La connaissance de l'amplitude $A_{OM}$ du faisceau objet marqué permet en particulier d'obtenir des informations quant à l'absorption lumineuse dans la zone de marquage acoustique, par exemple en vue de détecter la présence éventuelle d'un corps absorbant, par exemple une tumeur, dans la zone de marquage.

On notera que la technique d'acquisition décrite en relation avec les figures 1 et 2 permet uniquement de déterminer l'absorption moyenne au sein de la zone de marquage, mais ne permet pas d'obtenir d'informations sur l'absorption dans des régions localisées de la zone de marquage.

Pour déterminer l'absorption dans des régions localisées de la zone de marquage, une solution consiste à appliquer à l'onde acoustique de marquage des sauts de phase, par exemple selon un motif aléatoire ou pseudo-aléatoire. A titre d'exemple, à chaque nouvelle période de modulation acoustique $T_{US}$, un saut de phase de valeur 0 ou $\pi$, choisi de façon aléatoire ou pseudo-aléatoire, est appliqué à l'onde acoustique de marquage. Au niveau du capteur 109, après interférence du faisceau objet avec le faisceau de référence, le signal est échantillonné selon la méthode de démodulation quatre phases exposée en relation avec la figure 2, en tenant compte lors de la démodulation du motif $\Phi$ de sauts de phase appliqué à l'onde acoustique de marquage.

La figure 3 est un diagramme illustrant plus en détail ce principe de fonctionnement.

Le diagramme de la figure 3 comprend une courbe 301 représentant l'évolution, en fonction du temps t, en abscisse, de la contribution I($Z_{cible}$), en ordonnée, d'une position localisée $Z_{cible}$ de la zone de marquage, au signal lumineux objet reçu par le capteur 109 après interférence avec le signal de référence.

L'intensité I($Z_{cible}$) évolue de façon sinusoïdale autour d'une valeur moyenne ou composante continue $a_0$, avec une amplitude de crête de valeur $a_1$, à une fréquence égale à la fréquence de modulation acoustique $F_{US}$ du système. Toutefois, dans l'exemple de la figure 3, à chaque nouvelle période $T_{US}$ de la phase d'acquisition $T_{acq}$, l'intensité I($Z_{cible}$) subit un saut de phase de 0 ou $\pi$ correspondant au motif de sauts de phase $\Phi$ appliqué à l'onde acoustique de marquage, retardé d'un délai $\Delta t = Z_{cible}/V_{US}$, $V_{US}$ désignant la vitesse de propagation de l'onde acoustique de marquage dans le milieu observé.

Dans chaque pixel du capteur, le circuit d'intégration est configuré pour, à chaque période de modulation acoustique $T_{US}$ de la période d'acquisition $T_{acq}$, intégrer le photocourant délivré par la photodiode successivement dans les quatre capacités C0, C1, C2 et C3 (non visibles sur la figure 3), en tenant compte du motif de sauts de phase retardé $\Phi d = \Phi(t-\Delta t)$ pour déterminer l'ordre dans lequel les capacités C0, C1, C2 et C3 sont connectées à la photodiode. Plus particulièrement, dans cet exemple, à chaque période de modulation acoustique $T_{US}$ de la période d'acquisition $T_{acq}$, si la valeur courante de déphasage dans la séquence de sauts de phase $\Phi d$ est nulle, le photocourant est successivement intégré dans les capacités C0, C1, C2 et C3 dans le même ordre qu'à la période $T_{US}$ précédente. Si en revanche la valeur courante de déphasage dans la séquence de sauts de phase $\Phi d$ est égale à $\pi$, l'ordre d'intégration du photocourant dans les capacités C0 et C2 d'une part et C1 et C3 d'autre part est inversé.

A la fin de la phase d'acquisition $T_{acq}$, chaque pixel du capteur fournit quatre valeurs I0, I1, I2 et I3 représentatives respectivement des tensions aux bornes des capacités C0, C1, C2 et C3 du pixel. Les valeurs I0, I1, I2 et I3 sont représentatives principalement de la contribution au signal lumineux objet reçu par le pixel, de la position de la zone de marquage pour laquelle le motif de sauts de phase $\Phi d$ est corrélé au signal de modulation acoustique, c'est-à-dire la position $Z_{cible} = V_{US}*\Delta t$.

A partir de ces quatre valeurs, le champ complexe $E_{OM}$ de la partie du faisceau objet marquée par la modulation acoustique à la position $Z_{cible}$ de la zone de marquage peut être déterminé, pour chaque pixel du capteur, par la formule

$E_{OM}$ = (I0-I2) + j(I1-I3). La composante I0-I2 correspond à la partie réelle du champ $E_{OM}$, et la composante I1-I3 correspond à la partie imaginaire du champ $E_{OM}$. La phase $P_{OM}$ et l'amplitude $A_{OM}$ du faisceau objet marqué reçu en provenance de la position $Z_{cible}$ peuvent être déterminées par les mêmes formules Math 1 et Math 2 que dans l'exemple de la figure 2.

La mesure peut être réitérée en modifiant le retard $\Delta t$ entre la séquence $\Phi$ de sauts de phase appliquée au signal de modulation acoustique et la séquence $\Phi d$ appliquée au capteur, de façon à mesurer le champ $E_{OM}$ en provenance d'une autre position cible $Z_{cible}$ dans la zone de marquage.

Dans les exemples décrits ci-dessus, la moyenne des amplitudes $A_{OM}$ mesurées par les différents pixels du capteur permet d'obtenir une information quant à l'absorption moyenne de la zone de marquage (figure 2) ou quant à l'absorption d'une zone localisée de la zone de marquage (figure 3).

Dans certaines applications, il est en outre souhaitable de mesurer, dans chaque pixel, la phase $P_{OM}$ de la partie du faisceau objet mesurée par le pixel.

A titre d'exemple, chaque pixel peut comprendre un dispositif de contrôle de phase adapté à réémettre une partie de faisceau lumineux reçu par le pixel, avec un déphasage sélectionné en fonction de la phase $P_{OM}$ du faisceau incident. A titre d'exemple, chaque pixel comprend un miroir à conjugaison de phase adapté à réfléchir une partie du faisceau incident en direction du milieu observé, avec un déphasage $P_{OM}^*=-P_{OM}$ correspondant au conjugué de la phase $P_{OM}$ du faisceau incident mesurée par le pixel. Ceci permet de refocaliser une partie de la lumière reçue sur le capteur au niveau de la zone de marquage. Une telle refocalisation du faisceau objet dans la zone de marquage peut notamment permettre d'améliorer le rapport signal sur bruit de la mesure et/ou d'activer des molécules photosensibles dans la zone de refocalisation et/ou de détruire des cellules pathogènes par échauffement localisé du milieu.

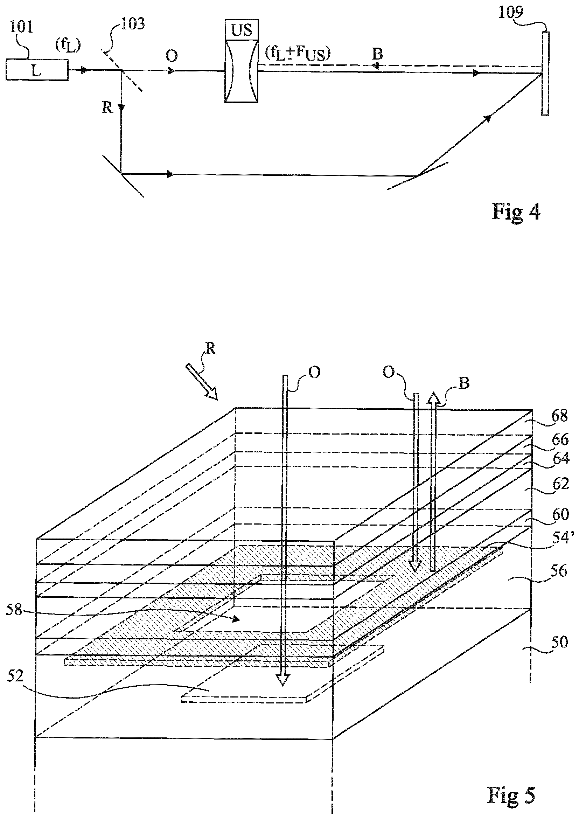

La figure 4 représente de façon schématique une variante du système d'imagerie acousto-optique de la figure 1, dans laquelle chaque pixel du capteur comprend un dispositif de contrôle de phase adapté à réfléchir une partie du faisceau lumineux reçu par le pixel, avec un déphasage contrôlé en fonction de la valeur de la phase $P_{OM}$ du faisceau incident mesurée par le pixel.

Sur la figure 4, on a représenté en trait interrompu le faisceau B réfléchi en direction de l'échantillon 105 et refocalisé par le capteur 109.

La figure 5 est une vue en perspective représentant de façon schématique un exemple de réalisation d'un pixel du capteur 109 de la figure 4.

Le pixel de la figure 5 comprend un substrat semiconducteur 50 dans une partie supérieure duquel est définie une zone de photodétection 52, par exemple photodiode.

Le substrat 50 est surmonté d'un empilement de couches de métallisation comprenant des pistes conductrices 54 séparées par un matériau isolant 56. Par souci de clarté, les pistes conductrices des premiers niveaux de métallisation ne sont pas représentées dans la perspective de la figure 5.

Dans un niveau supérieur de l'empilement d'interconnexion est définie une piste conductrice 54', au moins en partie réfléchissante à la longueur d'onde d'émission de la source lumineuse 101, qui recouvre au moins une partie du pixel. Dans l'exemple représenté, la région 54' est en un matériau opaque, par exemple dans le même matériau que les pistes conductrices des niveaux d'interconnexion inférieurs, par exemple un métal tel que l'aluminium ou le cuivre. Une ouverture 58 est définie dans la région 54' en regard de la zone de photodétection 52. Ainsi, des rayons lumineux incidents qui arrivent au niveau de l'ouverture 58 atteignent la surface de la zone de photodétection 52, tandis que des rayons lumineux incidents qui arrivent sur la région 54' sont réfléchis par celle-ci. Les surfaces relatives de la région 54' et de l'ouverture 58 sont choisies pour réfléchir une proportion souhaitée du faisceau incident, par exemple entre 40 et 50 % du flux lumineux incident du faisceau incident.

En surface de l'empilement d'interconnexion est formé un empilement d'une couche de cristaux liquides 62 et d'une couche conductrice transparente 66. Dans l'exemple représenté, l'empilement comprend en outre une première couche d'alignement 60 (couche d'accroche et d'alignement pour les cristaux liquides), disposée entre la face supérieure de l'empilement d'interconnexion et la face inférieure de la couche de cristaux liquides 62, et une deuxième couche d'alignement 64 disposée entre la face supérieure de la couche de cristaux liquides 62 et la face inférieure de la couche conductrice transparente 66. L'empilement comprend en outre à titre d'exemple une plaque supérieure de verre 68. La couche conductrice transparente 66 forme une première électrode de commande des cristaux liquides de la couche 62, tandis que la région 54' forme la deuxième électrode de commande. La couche conductrice transparente 66 est en un matériau conducteur transparent à la longueur d'onde de la source lumineuse 101. A titre d'exemple, la couche conductrice transparente 66 peut être en oxyde d'indium-étain (ITO).

Les éléments d'application de tensions de commande sur les électrodes 54' et 66 ne sont pas détaillés ici, la réalisation de pistes et/ou vias d'accès à des électrodes telles que les électrodes 54' et 66 étant bien connue dans les techniques de circuit intégré.

L'application d'une tension entre les électrodes 54' et 66 permet de modifier la structure des cristaux liquides de la couche 62, et donc la phase du faisceau lumineux réfléchi. On notera que cet ajustement est réalisé pixel par pixel, une contre-électrode 54' étant définie indépendamment dans chacun des pixels. La tension de commande appliquée à la couche de cristaux liquides 62, et donc le déphasage introduit par la couche 62, sont choisis en fonction d'une mesure de la phase du faisceau lumineux incident détecté par la photodiode 52, ladite mesure de phase étant réalisée par un circuit de lecture interne au pixel, non détaillé sur la figure 5.

Pour mesurer la phase du faisceau lumineux incident au sein de chaque pixel, une possibilité est d'appliquer la formule mathématique Math 1 susmentionnée. Toutefois, la mise en oeuvre d'un calcul d'arc tangente nécessite des circuits relativement complexes, difficiles à intégrer au sein d'un pixel.

Ainsi, on cherche ici à réaliser un pixel simple et compact adapté à fournir un signal représentatif de la phase d'un signal lumineux modulé à une fréquence acoustique.

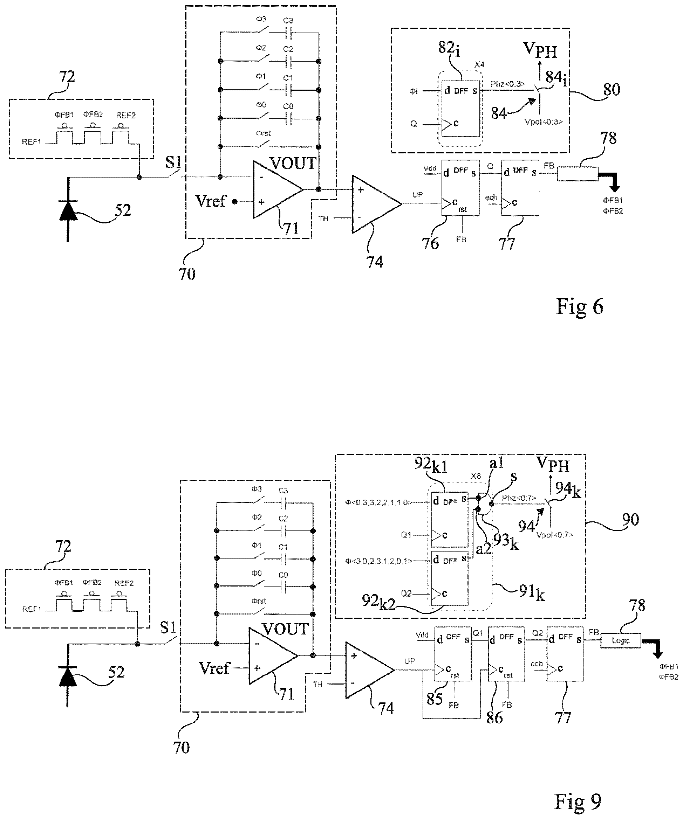

La figure 6 est un schéma électrique simplifié d'un exemple d'un mode de réalisation d'un pixel d'un capteur d'un système d'imagerie acousto-optique, par exemple du type décrit en relation avec les figures 4 et 5. En pratique, le capteur peut comporter une pluralité de pixels identiques ou similaires, par exemple agencés en matrice selon des rangées et des colonnes.

Le pixel de la figure 6 est adapté à mettre en oeuvre une démodulation à quatre phases du type décrit en relation avec les figures 2 et 3.

Le pixel de la figure 6 comprend une photodiode 52 adaptée à fournir un photocourant en fonction d'une intensité lumineuse reçue.

Le pixel de la figure 6 comprend de plus un étage d'intégration 70 configuré pour, à chaque période $T_{US}$ de la phase d'acquisition $T_{acq}$ du signal lumineux modulé, intégrer le photocourant délivré par la photodiode successivement dans quatre capacités distinctes C0, C1, C2 et C3. Les capacités C0, C1, C2 et C3 de l'étage d'intégration 70 sont par exemple de même valeur.

Dans cet exemple, l'étage d'intégration comprend un amplificateur opérationnel 71 ayant une entrée inverseuse (-) reliée à la cathode de la photodiode 52 par l'intermédiaire d'un interrupteur S1, et une entrée non inverseuse (+) reliée à un noeud d'application d'une tension de référence $V_{ref}$, par exemple une tension fixe continue. L'interrupteur S1 a un premier noeud de conduction relié, par exemple connecté, à la cathode de la photodiode 52, et un deuxième noeud de conduction relié, par exemple connecté, à l'entrée inverseuse (-) de l'amplificateur opérationnel 71. On notera que, dans la suite de la description, on désignera par les mêmes références les interrupteurs des circuits décrits et les signaux de commande de ces interrupteurs. Par exemple, on parlera du signal S1 pour désigner le signal de commande de l'interrupteur S1.

Dans l'exemple de la figure 6, l'étage d'intégration 70 comprend quatre interrupteurs $\phi0$, $\phi1$, $\phi2$, et $\phi3$ reliés en série avec les capacités C0, respectivement C1, respectivement C2, respectivement C3, entre l'entrée inverseuse et la sortie de l'amplificateur opérationnel 71. Plus particulièrement, dans cet exemple, chacune des capacités C0, C1, C2 et C3 a une première électrode connectée au noeud de sortie de l'amplificateur opérationnel 71 et une deuxième électrode reliée à l'entrée inverseuse de l'amplificateur opérationnel 71 par l'intermédiaire de l'interrupteur $\phi0$, respectivement $\phi1$, respectivement $\phi2$, respectivement $\phi3$. Chacun des interrupteurs $\phi0$, $\phi1$, $\phi2$ et $\phi3$ a un premier noeud de conduction relié, par exemple connecté, à l'entrée inverseuse de l'amplificateur opérationnel 71, et un deuxième noeud de conduction relié, par exemple connecté, respectivement à la deuxième électrode de la capacité C0, à la deuxième électrode de la capacité C1, à la deuxième électrode de la capacité C2, et à la deuxième électrode de la capacité C3.

L'étage d'intégration 70 comprend en outre un interrupteur de réinitialisation $\phi rst$ ayant un premier noeud de conduction relié, par exemple connecté, à l'entrée inverseuse de l'amplificateur opérationnel 71, et un deuxième noeud de conduction relié, par exemple connecté, à la sortie de l'amplificateur opérationnel 71.

Le pixel de la figure 6 comprend en outre un circuit d'injection de charges 72 commandable pour injecter une quantité fixe prédéterminée de charges de compensation, appelée contre-charge, dans chacune des capacités C0, C1, C2 et C3 de l'étage d'intégration 70. A titre d'exemple, le circuit d'injection de charges 72 comprend trois transistors MOS $\phi FB1$, $\phi FB2$ et REF2, par exemple des transistors MOS à canal P, reliés en série entre un noeud d'application d'une tension de référence REF1 et l'extrémité de l'interrupteur S1 opposée à l'entrée inverseuse de l'amplificateur opérationnel 71. A titre d'exemple, le transistor $\phi FB1$ a un premier noeud de conduction connecté au noeud d'application de la tension REF1 et un deuxième noeud de conduction connecté à un premier noeud de conduction du transistor $\phi FB1$, et le transistor REF2 a un premier noeud de conduction connecté à l'interrupteur S1 et un deuxième noeud de conduction connecté au deuxième noeud de conduction du transistor $\phi FB2$. Par souci de simplification, on désigne ici par les mêmes références les transistors MOS $\phi FB1$, $\phi FB2$ et REF2 et les signaux de commande de grille de ces transistors. Les signaux REF1 et REF2 sont par exemple des tensions de polarisation fixes continues, les signaux $\phi FB1$ et $\phi FB2$ étant des tensions de commande des transistors $\phi FB1$ et $\phi FB2$, chacune des tensions $\phi FB1$ et $\phi FB2$ ayant un niveau bas et un niveau haut définissant une barrière de potentiel à deux niveaux, étant entendu que le niveau bas, respectivement haut, de la tension $\phi FB1$ peut être différent du niveau bas, respectivement haut, de la tension $\phi FB2$.

Le pixel de la figure 6 comprend en outre un comparateur de tension 74 ayant une entrée positive (+) reliée, par exemple connectée, à un noeud de sortie de l'étage d'intégration 70. Plus particulièrement, dans cet exemple, l'entrée positive (+) du comparateur de tension 74 est reliée, par exemple connectée, au noeud de sortie de l'amplificateur opérationnel 71 de l'étage d'intégration 70. Le comparateur 74 a en outre une entrée négative (-) reliée, par exemple connectée, à un noeud d'application d'une tension seuil TH, par exemple une tension fixe continue. Le comparateur 74 a un noeud de sortie fournissant un signal UP, par exemple une tension, présentant un premier état, par exemple un état bas, lorsque la tension de sortie VOUT de l'étage d'intégration 70 est inférieure au seuil TH, et un deuxième état, par exemple un état haut, lorsque la tension de sortie VOUT de l'étage d'intégration 70 est supérieure au seuil TH.

Le pixel de la figure 6 comprend de plus une première bascule D (DFF) 76 ayant un noeud d'entrée de donnée d relié, par exemple connecté, à un noeud d'application d'une tension de référence fixe continue Vdd, correspondant par exemple à une tension d'alimentation haute du pixel et vue comme un état logique haut par la bascule 76, et un noeud d'entrée de commande c relié, par exemple connecté, au noeud de sortie du comparateur 74. La bascule 76 comprend en outre un noeud d'entrée de réinitialisation rst. La bascule 76 comprend de plus un noeud de sortie s fournissant un signal binaire de donnée Q représentatif de la valeur binaire, haute ou basse, stockée dans la bascule 76.

Le pixel de la figure 6 comprend en outre une deuxième bascule D 77 ayant un noeud d'entrée de donnée d relié, par exemple connecté, à la sortie s de la bascule 76 et un noeud d'entrée de commande c relié, par exemple connecté, à un noeud d'application d'un signal d'échantillonnage ech. La bascule 77 comprend de plus un noeud de sortie s fournissant un signal FB représentatif de la valeur binaire, haute ou basse, stockée dans la bascule 77. Le signal de sortie FB de la bascule 77 est appliqué sur le noeud d'entrée de réinitialisation rst de la bascule 76, par exemple par connexion directe du noeud de sortie s de la bascule 77 au noeud d'entrée de réinitialisation rst de la bascule 76.

Le pixel de la figure 6 comprend de plus, en sortie de la bascule 77, un circuit logique 78 générant les signaux de commande $\phi$FB1 et $\phi$FB2 du circuit d'injection de charges 72 en fonction de l'état du signal binaire de sortie FB de la bascule 77.

Le pixel de la figure 6 comprend de plus un circuit de détection de phase 80 adapté à générer un signal $V_{PH}$, par exemple une tension, représentatif de la phase du signal lumineux modulé reçu par la photodiode 52. A titre d'exemple, le signal $V_{PH}$ est représentatif du déphasage à appliquer sur le signal réfléchi, qui dépend de la phase du signal lumineux modulé reçu par la photodiode 52. Dans l'exemple de la figure 6, le circuit de détection de phase 80 comprend quatre bascules D $82_i$, avec i entier allant de 0 à 3. Chacune des bascules $82_i$ a un noeud d'entrée de donnée d recevant le signal de commande $\phi$i de l'interrupteur $\phi$i de même rang i de l'étage d'intégration 70. A titre d'exemple, chaque bascule $82_i$ a son noeud d'entrée de donnée d connecté au noeud de commande de l'interrupteur $\phi$i de même rang i. Chacune des bascules $82_i$ a en outre un noeud de commande c recevant le signal Q de sortie de la bascule 76. A titre d'exemple, chaque bascule $82_i$ a son noeud d'entrée c connecté au noeud de sortie de la bascule 76. Chaque bascule $82_i$ comprend de plus un noeud de sortie s fournissant un signal binaire de donnée Phz<i> représentatif de la valeur binaire, haute ou basse, stockée dans la bascule. Le signal Phz<0:3> constitué par les quatre bits de sortie des bascules $82_i$ est utilisé pour commander un commutateur 84 de quatre voies vers une voie du circuit de détection de phase 80. Dans cet exemple, le commutateur 84 est configuré pour appliquer sur le noeud de fourniture du signal de phase $V_{PH}$ l'une parmi quatre tensions de polarisation Vpol<0>, Vpol<1>, Vpol<2> et Vpol<3> prédéterminées, par exemple des tensions fixes ou variables de niveaux distincts, en fonction de l'état du signal Phz<0:3>. Plus particulièrement, dans cet exemple, le commutateur 84 comprend quatre interrupteurs $84_i$ ayant chacun un premier noeud de conduction relié, par exemple connecté, à un noeud d'application de la tension de polarisation Vpol<i> de même rang i, un deuxième noeud de conduction relié, par exemple connecté, au noeud de fourniture de la tension $V_{PH}$, et un noeud de commande relié, par exemple connecté, au noeud de sortie s de la bascule $82_i$ de même rang i. Dans cet exemple, les signaux de sortie des bascules $82_i$ sont mutuellement exclusifs, c'est-à-dire que, à un instant donné, seul l'un des interrupteurs $84_i$ peut être fermé (i.e. deux interrupteurs $84_i$ ne peuvent pas être fermés simultanément). Ainsi, la tension de sortie $V_{PH}$ du circuit de détection de phase 80 peut prendre l'une des quatre valeurs de tension Vpol<0>, Vpol<1>, Vpol<2> et Vpol<3>, en fonction de l'état du signal Phz<0:3>. A titre d'exemple, dans une structure de pixel du type décrit en relation avec la figure 5, la tension $V_{PH}$ peut être utilisée directement pour commander la couche de cristaux liquides 62 du pixel. Dans ce cas, le noeud de fourniture de la tension de sortie $V_{PH}$ peut être connecté à l'électrode de polarisation 54' du pixel.

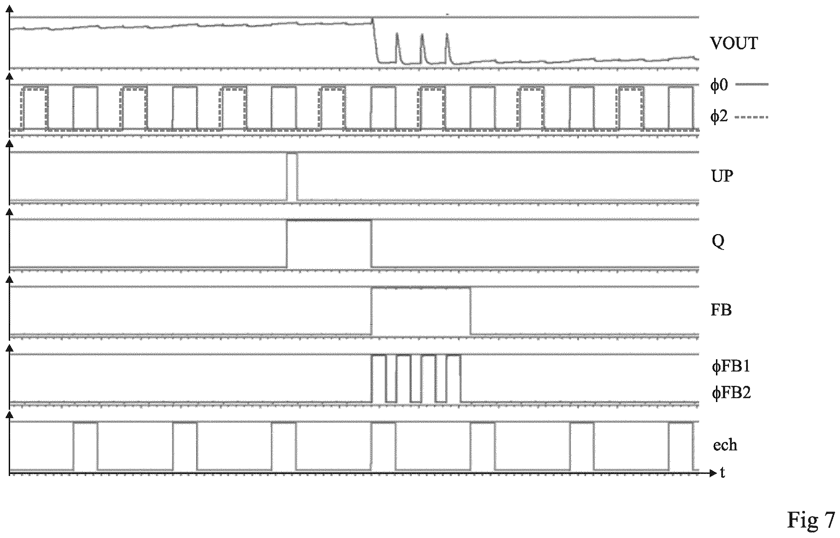

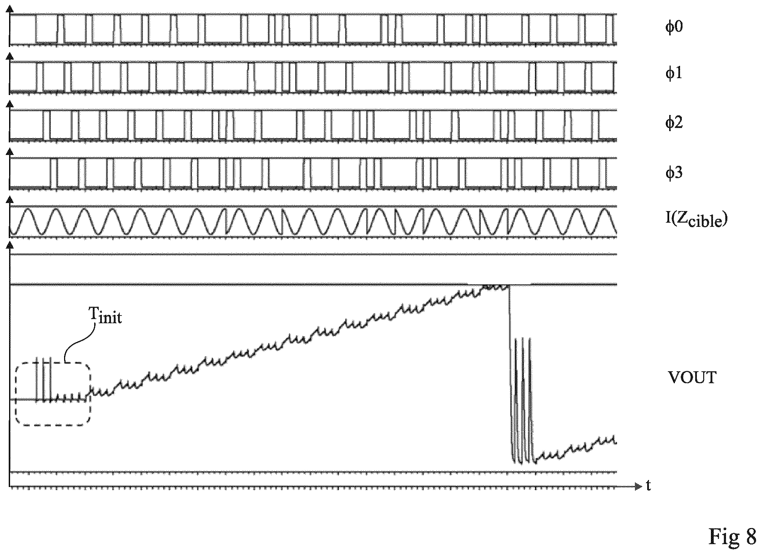

Le fonctionnement du pixel de la figure 6 va maintenant être décrit plus en détail en relation avec les figures 7 et 8.

Les figures 7 et 8 sont des diagrammes illustrant l'évolution, en fonction du temps, de divers signaux internes et/ou de commande du pixel de la figure 6 lors d'une phase de mesure d'un signal lumineux modulé à une fréquence acoustique, par exemple un signal du type décrit précédemment en relation avec la figure 2 (signal lumineux modulé à une fréquence acoustique sans sauts de phases aléatoires) ou en relation avec la figure 3 (signal lumineux modulé à une fréquence acoustique avec sauts de phases aléatoires).

La figure 7 représente plus particulièrement l'évolution, en fonction du temps t (en abscisse) de la tension de sortie VOUT du circuit d'intégration 70, des tensions de commande $\phi$0 et $\phi$2 des interrupteurs $\phi$0 et $\phi$2 du circuit d'intégration 70, de la tension UP de sortie du comparateur 74, de la tension de sortie Q de la bascule 76, de la tension de sortie FB de la bascule 77, des tensions de commande $\phi$FB1 et $\phi$FB2 du circuit d'injection de charges 72, et de la tension de commande ech de la bascule 77.

Par souci de simplification, les tensions de commande $\phi$1 et $\phi$3 des interrupteurs $\phi$1 et $\phi$3 du circuit d'intégration 70 n'ont pas été représentées sur la figure 7.

La figure 7 représente un fonctionnement en démodulation sans saut de phase, par exemple pour mesurer un signal lumineux modulé du type décrit en relation avec la figure 2.

La figure 8 représente l'évolution, en fonction du temps t (en abscisse) de la tension de sortie VOUT du circuit d'intégration 70, et des tensions de commande $\phi 0$, $\phi 1$, $\phi 2$ et $\phi 3$ des interrupteurs $\phi 0$, $\phi 1$, $\phi 2$ et $\phi 3$ du circuit d'intégration 70. La figure 8 représente en outre l'évolution, en fonction du temps, de l'intensité lumineuse $I(Z_{cible})$ que l'on cherche à mesurer.

La figure 8 représente un fonctionnement en démodulation avec sauts de phase aléatoires, par exemple pour mesurer un signal lumineux modulé du type décrit en relation avec la figure 3.

Pendant toute la durée de la phase de mesure du signal lumineux, l'interrupteur S1 du pixel est maintenu fermé (passant). Au début de la phase de mesure, les tensions aux bornes des capacités C0, C1, C2 et C3 de l'étage d'intégration 70 sont toutes ramenées à zéro par la fermeture simultanée des interrupteurs $\phi 0$, $\phi 1$, $\phi 2$, $\phi 3$ et $\phi rst$, lors d'une phase d'initialisation $T_{init}$ (figure 8). A la fin de la phase d'initialisation $T_{init}$, la phase d'acquisition proprement dite du signal lumineux modulé (phase $T_{acq}$ des figures 2 et 3) débute.

Pendant toute la durée de la phase d'acquisition $T_{acq}$, le courant photonique généré par la photodiode est intégré séquentiellement dans les capacités C0, C1, C2 et C3, selon le procédé de démodulation quatre phases décrit en relation avec la figure 2 ou 3. Pour cela, dans l'exemple de la figure 7, à chaque période de modulation acoustique $T_{US}$ de la phase $T_{acq}$, les signaux de commande $\phi 0$, $\phi 1$, $\phi 2$ et $\phi 3$ sont successivement mis à l'état haut (correspondant à un état de commande en fermeture des interrupteurs $\phi 0$, $\phi 1$, $\phi 2$ et $\phi 3$), dans cet ordre pendant une période de l'ordre de $T_{US}/4$. Les signaux $\phi 0$, $\phi 1$, $\phi 2$ et $\phi 3$ sont non recouvrants de façon que, pendant toute la durée de la phase d'acquisition $T_{acq}$, deux des interrupteurs $\phi 0$, $\phi 1$, $\phi 2$ et $\phi 3$ ne soient jamais simultanément fermés. Dans l'exemple de la figure 8, à chaque période de modulation $T_{US}$ de la phase $T_{acq}$, les signaux de commande $\phi 0$, $\phi 1$, $\phi 2$ et $\phi 3$ sont successivement mis à l'état haut dans un ordre choisi en fonction de la valeur courante de phase du motif de sauts de phase retardé $\Phi d$ utilisé pour la démodulation. Le motif de sauts de phase retardé $\Phi d$ appliqué pendant la phase d'acquisition peut être commun à tous les pixels du capteur, et l'ordre de commutation des interrupteurs $\phi 0$, $\phi 1$, $\phi 2$ et $\phi 3$ peut être déterminé de façon commune pour tous les pixels du capteur.

En pratique, le faisceau lumineux objet reçu par chaque pixel comprend des photons marqués par la modulation acoustique et des photons non marqués par la modulation acoustique. On retrouve donc dans le signal lumineux reçu par la photodiode la composante sinusoïdale de fréquence $F_{US}$, correspondant aux photons marqués, mais aussi un offset. L'énergie lumineuse associée à cet offset peut être très supérieure, par exemple plus de 100 fois supérieure, à l'énergie de la partie marquée du faisceau.

Ainsi, les tensions aux bornes des capacités C0, C1, C2 et C3 croissent progressivement à chaque nouvelle période de modulation acoustique $T_{US}$ de la phase d'acquisition $T_{acq}$. L'intégration du courant photonique dans les quatre capacités C0, C1, C2 et C3 du circuit d'intégration 70 peut alors conduire à une saturation très rapide du pixel avec in fine une quantité de signal utile collectée très faible (faible rapport signal sur bruit).

Le comparateur 74, les bascules 76 et 77 et le circuit d'injection de charges 72 forment un circuit de compensation de l'offset. Le comparateur 74 permet de détecter le franchissement d'un seuil de tension prédéterminé TH, par exemple de l'ordre de 2 volts, par l'une des capacités C0, C1, C2 et C3 lors d'une phase d'intégration du photocourant dans cette capacité. Dès que le seuil TH est franchi par l'une des capacités C0, C1, C2 et C3, le signal UP de sortie du comparateur 74 passe à l'état haut, ce qui entraîne immédiatement le passage à l'état haut du signal de sortie Q de la bascule 76 (préalablement initialisée à l'état bas).

Le signal ech de commande de la bascule 77 est un signal périodique en créneau de fréquence $F_{US}$ présentant un front montant au début de chaque période $T_{US}$ de la phase d'acquisition $T_{acq}$. Ainsi, le signal de sortie FB de la bascule 77 passe à l'état haut au début de la période de modulation acoustique $T_{US}$ suivant la période $T_{US}$ ayant conduit au franchissement du seuil TH par l'une des capacités C0, C1, C2 et C3. Le signal FB étant appliqué sur le noeud de réinitialisation de la bascule 76, ceci conduit à la réinitialisation de la bascule 76. Le signal Q repasse alors à l'état bas.

Lors de la période $T_{US}$ suivant le passage à l'état haut du signal FB, le circuit logique 78 commande le circuit d'injection de charges 72 (via les signaux $\phi FB1$ et $\phi FB2$) et le circuit d'intégration 70 (via les signaux $\phi 0$, $\phi 1$, $\phi 2$ et $\phi 3$) de façon à injecter dans chacune des capacités C0, C1, C2 et C3 du circuit d'intégration une même contre charge $\Delta q$, de valeur prédéterminée. Pour cela, dans cet exemple, les signaux de commande $\phi 0$, $\phi 1$, $\phi 2$ et $\phi 3$ sont, comme décrit précédemment, commandés successivement à l'état fermé pendant une période de l'ordre de $T_{US}/4$. A chacune des quatre périodes de fermeture d'un interrupteur $\phi i$, les tensions $\phi FB1$ et $\phi FB2$, initialement à leurs niveaux bas respectifs, sont successivement mises à leurs niveaux hauts respectifs à quelques nanosecondes d'intervalle (par exemple à un intervalle compris entre 1 et 20 ns) en commençant par la tension $\phi FB1$, puis maintenues à leurs niveaux hauts respectifs pendant une première partie de la période de fermeture de l'interrupteur $\phi i$, par exemple pendant la première moitié de la période de fermeture de l'interrupteur $\phi i$. La mise à l'état haut de la tension $\phi FB1$ fait office de barrière de potentiel pour la contre charge $\Delta q$ stockée dans le canal du transistor $\phi FB2$ de sorte que, lors du passage de la tension $\phi FB2$ à son niveau haut, les charges de la contre charge $\Delta q$ franchissent la barrière de potentiel REF2 (avec REF2>Vref), et migrent vers la capacité Ci connectée à l'interrupteur $\phi i$. Les tensions $\phi FB1$ puis $\phi FB2$ sont ensuite basculées à leurs niveaux bas respectifs puis maintenues à leurs niveaux bas respectifs pendant la deuxième partie de la période de fermeture de l'interrupteur $\phi$i, afin de précharger à nouveau la région de canal du transistor $\phi$FB2 en vue de l'injection de la contre charge $\Delta$q suivante.

Ainsi, on ajoute à chacun des quatre échantillons I0, I1, I2 et I3 de sortie du pixel une contribution commune qui peut être vue en moyenne comme un courant de compensation du courant photonique d'offset. A la fin de la phase d'acquisition $T_{acq}$, chacun des échantillons I0, I1, I2 et I3 sera porteur de l'intégration des N phases i0$_j$, respectivement i1$_j$, respectivement i2$_j$, respectivement i3$_j$, décrites précédemment, ainsi que d'un offset résiduel commun. L'offset résiduel sera annulé lors du calcul des parties réelle et imaginaire du signal objet, par différentiation des échantillons I0-I2 et I1-I3.

Au cours de la phase d'acquisition $T_{acq}$, l'offset étant commun à tous les échantillons I0, I1, I2 et I3, l'ordre de franchissement du seuil TH par les échantillons renseigne sur les grandeurs relatives des énergies portées par le photocourant dans chacune des périodes d'intégration i0$_j$, i1$_j$, i2$_j$ et i3$_j$. Ainsi, connaissant le rang de l'échantillon ayant franchi le seuil en premier, on peut remonter à la phase du signal lumineux modulé mesuré par le pixel.

En pratique, lors d'une même période de modulation acoustique $T_{US}$ de la phase d'acquisition $T_{acq}$, le seuil TH peut être franchi par plusieurs des capacités C0, C1, C2 et C3 du pixel. Dans ce cas, avec le fonctionnement décrit ci-dessus, il n'est pas possible, à la fin de la période de modulation $T_{US}$, de savoir lequel des échantillons I0, I1, I2 et I3 a la valeur la plus élevée. En effet, dans le pixel de la figure 6, les quatre bascules 82$_i$ ont pour signal d'échantillonnage ou signal de commande le signal Q. Ce signal n'étant réinitialisé qu'après application de la contre charge $\Delta$q, si deux échantillons ou plus venaient à franchir le seuil avant l'activation du signal FB, seul le premier signal $\phi$i à l'état haut lors d'un franchissement du seuil TH sera pris en compte. Ce montage garantit que seul l'un des interrupteurs 84$_i$ soit passant à la fois, les signaux $\phi$i étant non recouvrants. Pour l'application de refocalisation du faisceau objet décrite ci-dessus, compte tenu de la faible résolution de quantification requise sur la phase pour l'opération de refocalisation, on peut considérer l'erreur introduite par la sélection du premier échantillon franchissant le seuil TH comme tolérable. On notera de plus qu'au cours des périodes de modulation $T_{US}$ successives de la phase d'acquisition $T_{acq}$, l'écart entre les valeurs des échantillons I0, I1, I2 et I3 allant croissant, la détermination de la valeur de phase sera de plus en plus précise. La détermination à la volée de la valeur de phase au cours de la phase d'acquisition $T_{acq}$ présente l'avantage, dans l'application susmentionnée à la refocalisation du faisceau objet, de permettre de commencer à polariser la couche de cristaux liquides sans attendre la fin de la mesure. Le réajustement éventuel de la valeur de phase au cours de l'acquisition du fait de l'accroissement de la différence entre les valeurs des différents échantillons sera d'autant plus rapide (du point de vue du réalignement physique des molécules de cristaux liquides) que l'estimation de la phase a une forte probabilité d'être de plus en plus stable au cours de l'acquisition, avec des variations potentielles de phase estimée n'apparaissant qu'entre des quadrants voisins, et donc des sauts de polarisation du cristal liquide de plus en plus faibles (dans l'exemple d'application des figures 4 et 5).

Dans l'exemple de la figure 6, le pixel réalise une quantification de la phase sur deux bits-seulement, ce qui est suffisant pour l'application de refocalisation du faisceau objet décrite ci-dessus. A titre d'exemple, la valeur de la phase du faisceau lumineux modulé peut être considérée comme étant égale à :

- 0 lorsque le signal Phz<0:3> vaut '1000' ;
- $3\pi/2$ lorsque le signal Phz<0:3> vaut '0100' ;
- $\pi$ lorsque le signal Phz<0:3> vaut '0010' ; et
- $\pi/2$ lorsque le signal Phz<0:3> vaut '0001'.

Pour obtenir une mesure de phase quantifiée sur plus de deux bits, une possibilité est de rechercher quels sont les deux premiers échantillons à franchir le seuil TH, et dans quel ordre. Cette recherche peut être effectuée sur plusieurs périodes de modulation $T_{US}$ successives. La recherche du rang du deuxième échantillon à franchir le seuil TH doit être réalisée avant l'application de la contre charge $\Delta$q dans les capacités C0, C1, C2 et C3. Le dimensionnement de l'intégrateur 70 et du seuil TH peut alors être choisi de façon à permettre de poursuivre sans saturation l'intégration du premier échantillon à avoir franchi le seuil jusqu'au franchissement du seuil par le deuxième échantillon.

La figure 9 est un schéma électrique simplifié illustrant une variante du pixel de la figure 6, adaptée pour permettre la recherche des deux premiers échantillons à avoir franchi le seuil TH, de façon à fournir une valeur de phase quantifiée sur trois bits (huit valeurs de phase possibles).

Le pixel de la figure 9 diffère du pixel de la figure 6 en ce que, dans le pixel de la figure 9, la bascule D 76 du pixel de la figure 6 est remplacée par une association de deux bascules D 85 et 86 cascadées en série partageant le même signal d'échantillonnage UP.

La bascule 85 a un noeud d'entrée de donnée d relié, par exemple connecté, au noeud Vdd, et un noeud d'entrée de commande c relié, par exemple connecté, au noeud de sortie du comparateur 74. La bascule 85 comprend de plus un noeud de sortie s fournissant un signal binaire de donnée Q1. La bascule 86 a quant à elle un noeud d'entrée de donnée d relié, par exemple connecté, au noeud de sortie s de la bascule 85, et un noeud de commande c relié, par exemple connecté, au noeud de sortie du comparateur 74. La bascule 86 comprend de plus un noeud de sortie s fournissant un signal binaire de donnée Q2. Le noeud de sortie s de la bascule 86 est relié, par exemple connecté, au noeud d'entrée de donnée d de la bascule 77. Chacune des bascules 85 et 86 comprend en outre un noeud de réinitialisation rst relié, par exemple connecté, au noeud de sortie s de la bascule 77.

Le pixel de la figure 9 diffère en outre du pixel de la figure 6 en ce que, dans le pixel de la figure 9, le circuit de détection de phase 80 du pixel de la figure 6 est remplacé par un circuit de détection de phase 90.

Le circuit de détection de phase 90 est adapté à générer un signal $V_{PH}$ représentatif de la phase du signal lumineux modulé reçu par la photodiode 52. Dans l'exemple de la figure 9, le circuit de détection de phase 90 comprend huit sous-circuits de détection $91_k$, avec k entier allant de 0 à 7. Chaque sous-circuit de détection $91_k$ comprend deux bascules D $92_{k1}$ et $92_{k2}$, et une porte ET $93_k$ de deux entrées a1 et a2 vers une sortie s. Chacune des huit bascules $92_{k1}$ comprend un noeud d'entrée d recevant l'un des quatre signaux de commande $\phi0$, $\phi1$, $\phi2$ et $\phi3$, et un noeud de commande c recevant le signal de sortie Q1 de la bascule 85. Chacune des huit bascules $92_{k2}$ comprend un noeud d'entrée d recevant l'un des quatre signaux de commande $\phi0$, $\phi1$, $\phi2$ et $\phi3$, et un noeud de commande c recevant le signal de sortie Q2 de la bascule 85. Les connexions des signaux $\phi0$, $\phi1$, $\phi2$ et $\phi3$ aux noeuds d'entrée des 16 bascules $92_{k1}$ et $92_{k2}$ sont telles que les 8 sous-circuits de détection $91_k$ reçoivent respectivement sur les noeuds d'entrée d de leurs bascules $92_{k1}$ et $92_{k2}$ les huit combinaisons possibles d'ordres de franchissement du seuil TH par deux des échantillons I0, I1, I2 et I3. Plus particulièrement, dans cet exemple :

- les bascules $92_{01}$ et $92_{02}$ reçoivent sur leurs noeuds d respectivement les signaux $\phi0$ et $\phi1$ ;
- les bascules $92_{11}$ et $92_{12}$ reçoivent sur leurs noeuds d respectivement les signaux $\phi1$ et $\phi0$ ;
- les bascules $92_{21}$ et $92_{22}$ reçoivent sur leurs noeuds d respectivement les signaux $\phi1$ et $\phi2$ ;
- les bascules $92_{31}$ et $92_{32}$ reçoivent sur leurs noeuds d respectivement les signaux $\phi2$ et $\phi1$ ;
- les bascules $92_{41}$ et $92_{42}$ reçoivent sur leurs noeuds d respectivement les signaux $\phi2$ et $\phi3$ ;
- les bascules $92_{51}$ et $92_{52}$ reçoivent sur leurs noeuds d respectivement les signaux $\phi3$ et $\phi2$ ;
- les bascules $92_{61}$ et $92_{62}$ reçoivent sur leurs noeuds d respectivement les signaux $\phi3$ et $\phi0$ ; et
- les bascules $92_{71}$ et $92_{72}$ reçoivent sur leurs noeuds d respectivement les signaux $\phi0$ et $\phi3$.

Dans chaque sous-circuit de détection $91_k$, la bascule $92_{k1}$ a un noeud de sortie s relié, par exemple connecté, au noeud d'entrée a1 de la porte ET $93_k$ et la bascule $92_{k2}$ a un noeud de sortie s relié, par exemple connecté, au noeud d'entrée a2 de la porte ET $93_k$.

Dans chacun des sous-circuits de détection de phase $91_k$, le noeud de sortie s de la porte ET $93_k$ fournit un signal binaire de donnée Phz<k> représentatif de la combinaison logique par la porte ET $93_k$ des valeurs binaires stockées dans les bascules $92_{k1}$ et $92_{k2}$. Le signal Phz<0:7> constitué par les huit bits de sortie des portes ET $93_k$ est utilisé pour commander un commutateur 94 de huit voies vers une voie du circuit de détection de phase 90. Dans cet exemple, le commutateur 94 est configuré pour appliquer sur le noeud de fourniture du signal de phase $V_{PH}$ l'une parmi huit tensions de polarisation Vpol<0>, Vpol<1>, Vpol<2>, Vpol<3>, Vpol<4>, Vpol<5>, Vpol<6> et Vpol<7> prédéterminées, par exemple des tensions fixes ou variables de niveaux distincts, en fonction de l'état du signal Phz<0:7>. Plus particulièrement, dans cet exemple, le commutateur 94 comprend huit interrupteurs $94_k$ ayant chacun un premier noeud de conduction relié, par exemple connecté, à un noeud d'application de la tension de polarisation Vpol<k> de même rang k, un deuxième noeud de conduction relié, par exemple connecté, au noeud de fourniture de la tension $V_{PH}$, et un noeud de commande relié, par exemple connecté, au noeud de sortie s de la porte ET $93_k$ de même rang k. Dans cet exemple, les signaux de sortie des portes ET $93_k$ sont mutuellement exclusifs, c'est-à-dire que, à un instant donné, seul l'un des interrupteurs $94_k$ peut être fermé. Ainsi, la tension de sortie $V_{PH}$ du circuit de détection de phase 90 ne peut prendre que l'une des huit valeurs de tension Vpol<0>, Vpol<1>, Vpol<2>, Vpol<3>, Vpol<4>, Vpol<5>, Vpol<6> et Vpol<7>, en fonction de l'état du signal Phz<0:7>.

Dans le pixel de la figure 9, le signal Q1 passe à l'état haut après le franchissement du seuil TH par un premier échantillon, et le signal Q2 passe à l'état haut après le franchissement du seuil TH par un deuxième échantillon. Le signal de contre réaction FB est ensuite activé après échantillonnage de l'état haut du signal Q2 par le signal ech, dans la bascule 77. Les signaux Q1 et Q2 permettent en parallèle les échantillonnages des huit couples de signaux de commande $(\phi0, \phi3)$, $(\phi3, \phi0)$, $(\phi3, \phi2)$, $(\phi2, \phi3)$, $(\phi2, \phi1)$, $(\phi1, \phi2)$, $(\phi1, \phi0)$ et $(\phi0, \phi1)$ dans les huit sous-circuits de détection $91_k$. A l'issue de cet échantillonnage, seul le sous-circuit $91_k$ ayant échantillonné deux signaux de commande à l'état haut sur les fronts montants des signaux Q1 et Q2 fournira un signal de sortie à l'état haut, permettant la sélection d'une valeur correspondante de la tension $V_{PH}$.

Dans l'exemple de la figure 9, le pixel réalise une quantification de la phase sur trois bits. A titre d'exemple, la valeur de la phase du faisceau lumineux modulé est considérée comme étant égale à :

- 0 lorsque le signal Phz<0:7> vaut '10000000' (franchissement du seuil TH d'abord par l'échantillon I0 puis par l'échantillon I3) ;
- $\pi/4$ lorsque le signal Phz<0:7> vaut '01000000' (franchissement du seuil TH d'abord par l'échantillon I3 puis par l'échantillon I0) ;

- π/2 lorsque le signal Phz<0:7> vaut '00100000' (franchissement du seuil TH d'abord par l'échantillon I3 puis par l'échantillon I2) ;
- 3π/4 lorsque le signal Phz<0:7> vaut '00010000' (franchissement du seuil TH d'abord par l'échantillon I2 puis par l'échantillon I3) ;
- π lorsque le signal Phz<0:7> vaut '00001000' (franchissement du seuil TH d'abord par l'échantillon I2 puis par l'échantillon I1) ;
- 5π/4 lorsque le signal Phz<0:7> vaut '00000100' (franchissement du seuil TH d'abord par l'échantillon I1 puis par l'échantillon I2) ;
- 3π/2 lorsque le signal Phz<0:7> vaut '000000010' (franchissement du seuil TH d'abord par l'échantillon I1 puis par l'échantillon I0) ; et
- 7π/4 lorsque le signal Phz<0:7> vaut '00000001' (franchissement du seuil TH d'abord par l'échantillon I0 puis par l'échantillon I1).

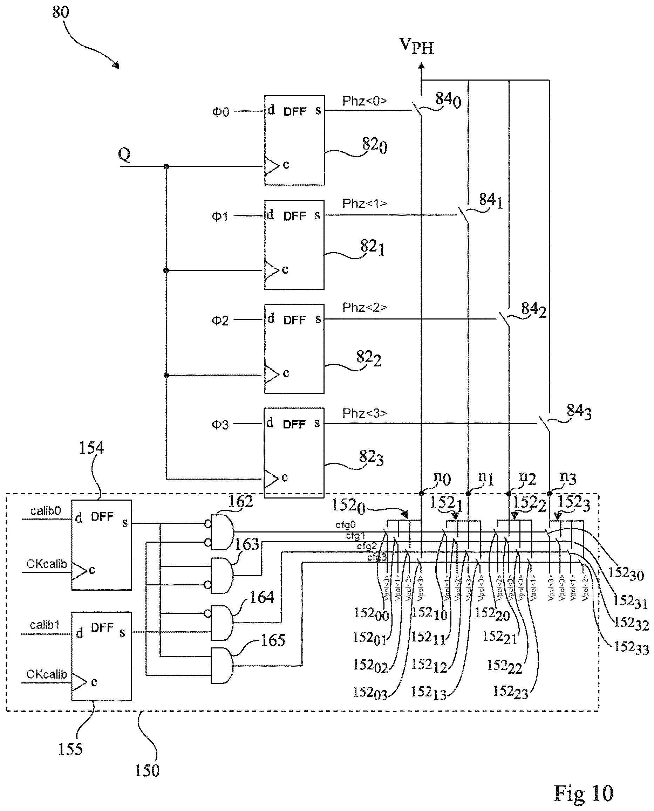

La figure 10 est un schéma électrique simplifié d'une variante de réalisation du circuit de détection de phase 80 du pixel de la figure 6. Cette variante permet, lors de la génération du signal de phase $V_{PH}$, dans le cas d'une structure de pixel du type décrit en relation avec la figure 5, de compenser d'éventuels défauts de planéité de la couche de verre supérieure 68 ou des variations d'épaisseur de la couche de cristaux liquides 62. En effet, dans une structure du type décrit en relation avec la figure 5, la couche de verre 68 peut être commune à tous les pixels du capteur. Si la couche 68 n'est pas parfaitement plane, ou si cette couche n'est pas disposée de manière strictement parallèle à la matrice de pixels 50, la non uniformité de l'épaisseur de la couche 62 peut introduire des déphasages du faisceau lumineux réfléchi différents entre différents pixels du capteur pour une même polarisation $V_{PH}$. Dans la variante de la figure 10, le circuit de détection de phase 80 est configuré pour ajuster la tension $V_{PH}$ en fonction de données de calibration prédéterminées, de façon à compenser les différences de phases liées aux différences d'épaisseur de la couche 68 et/ou 62 entre différents pixels du capteur.

Dans l'exemple de la figure 10, le circuit de détection de phase 80 comprend quatre bascules $82_i$ et un commutateur 84 comportant quatre interrupteurs $84_i$, agencés de façon similaire à ce qui a été décrit en relation avec la figure 6, à la différence près que, dans l'exemple de la figure 10, les noeuds de conduction des interrupteurs $84_0$, $84_1$, $84_2$ et $84_3$ ne sont pas connectés directement aux noeuds d'applications des tensions de polarisation Vpol<0>, respectivement Vpol<1>, respectivement Vpol<2>, respectivement Vpol<3>, mais sont connectés à des noeuds intermédiaires $n_0$, respectivement $n_1$, respectivement $n_2$, respectivement $n_3$.

Le circuit de détection de phase 80 de la figure 10 comprend en outre un circuit de compensation 150 faisant interface entre les noeuds d'application des tensions de polarisation Vpol<0>, Vpol<1>, Vpol<2> et Vpol<3> et les noeuds $n_0$, $n_1$, $n_2$ et $n_3$.

Le circuit de compensation 150 comprend quatre commutateurs $152_i$ comportant chacun quatre interrupteurs $152_{ii'}$, avec i' entier allant de 0 à 3.

Chaque commutateur $152_i$ est configuré pour appliquer sur le noeud $n_i$ de même rang i l'une parmi les quatre tensions de polarisation Vpol<0>, Vpol<1>, Vpol<2> et Vpol<3>. Plus particulièrement, dans cet exemple, le commutateur $152_0$ comprend quatre interrupteurs $152_{00}$, $152_{01}$, $152_{02}$, $152_{03}$ ayant chacun un premier noeud de conduction relié, par exemple connecté, à un noeud d'application de la tension de polarisation Vpol<0>, respectivement Vpol<1>, respectivement Vpol<2>, respectivement Vpol<3> et un deuxième noeud de conduction relié, par exemple connecté, au noeud $n_0$. Le commutateur $152_1$ comprend quatre interrupteurs $152_{10}$, $152_{11}$, $152_{12}$, $152_{13}$ ayant chacun un premier noeud de conduction relié, par exemple connecté, à un noeud d'application de la tension de polarisation Vpol<1>, respectivement Vpol<2>, respectivement Vpol<3>, respectivement Vpol<0> et un deuxième noeud de conduction relié, par exemple connecté, au noeud $n_1$. Le commutateur $152_2$ comprend quatre interrupteurs $152_{20}$, $152_{21}$, $152_{22}$, $152_{23}$ ayant chacun un premier noeud de conduction relié, par exemple connecté, à un noeud d'application de la tension de polarisation Vpol<2>, respectivement Vpol<3>, respectivement Vpol<0>, respectivement Vpol<1> et un deuxième noeud de conduction relié, par exemple connecté, au noeud $n_2$. Le commutateur $152_3$ comprend quatre interrupteurs $152_{30}$, $152_{31}$, $152_{32}$, $152_{33}$ ayant chacun un premier noeud de conduction relié, par exemple connecté, à un noeud d'application de la tension de polarisation Vpol<3>, respectivement Vpol<0>, respectivement Vpol<1>, respectivement Vpol<2> et un deuxième noeud de conduction relié, par exemple connecté, au noeud $n_3$.

Les interrupteurs $152_{00}$, $152_{10}$, $152_{20}$ et $152_{30}$ ont leurs noeuds de commande connectés à un même noeud d'application d'un signal de commande cfg0. Les interrupteurs $152_{01}$, $152_{11}$, $152_{21}$ et $152_{31}$ ont leurs noeuds de commande connectés à un même noeud d'application d'un signal de commande cfg1. Les interrupteurs $152_{02}$, $152_{12}$, $152_{22}$ et $152_{32}$ ont leurs noeuds de commande connectés à un même noeud d'application d'un signal de commande cfg2. Les interrupteurs $152_{03}$, $152_{13}$, $152_{23}$ et $152_{33}$ ont leurs noeuds de commande connectés à un même noeud d'application d'un signal de commande cfg3.

Les signaux de commande cfgi sont mutuellement exclusifs, c'est-à-dire qu'un seul des quatre jeux d'interrupteurs $\{152_{00}, 152_{10}, 152_{20}, 152_{30}\}$, $\{152_{01}, 152_{11}, 152_{21}, 152_{31}\}$, $\{152_{02}, 152_{12}, 152_{22}, 152_{32}\}$ et $\{152_{03}, 152_{13}, 152_{23},$

$152_{33}$} peut être fermé à la fois.

Les signaux de commande cfgi sont générés à partir d'une valeur numérique de calibration codée sur deux bits calib0 et calib1, préalablement déterminés et stockés dans le pixel. Dans cet exemple, le circuit de compensation 150 comprend deux bascules D 154 et 155. La bascule D 154 comprend un noeud d'entrée de donnée d sur lequel est appliqué le signal calib0, et un noeud de commande sur lequel est appliqué un signal CKcalib d'échantillonnage de la valeur de calibration. La bascule D 155 comprend un noeud d'entrée de donnée d sur lequel est appliqué le signal calib1, et un noeud de commande sur lequel est appliqué le signal CKcalib. Le circuit de compensation 150 de la figure 10 comprend en outre un circuit logique 160 de décodage de la valeur numérique de calibration adapté à générer les signaux de commande cfg0, cfg1, cfg2 et cfg3 à partir des valeurs binaires calib0 et calib1 stockées dans les bascules 154 et 155. Dans cet exemple, le circuit 160 comporte quatre portes ET 162, 163, 164 et 165, ayant chacune deux entrées et une sortie. La porte ET 162 présente deux entrées complémentées connectées respectivement à un noeud s de sortie de la bascule 154 et à un noeud s de sortie de la bascule 155. La porte ET 163 présente une entrée non complémentée et une entrée complémentée connectées respectivement à un noeud s de sortie de la bascule 154 et à un noeud s de sortie de la bascule 155. La porte ET 164 présente une entrée complémentée et une entrée non complémentée connectées respectivement à un noeud s de sortie de la bascule 154 et à un noeud s de sortie de la bascule 155. La porte ET 165 présente deux entrées non complémentées connectées respectivement à un noeud s de sortie de la bascule 154 et à un noeud s de sortie de la bascule 155. Les sorties des portes ET 162, 163, 164 et 165 fournissent respectivement les signaux de commande cfg0, cfg1, cfg2 et cfg3 des commutateurs $152_{ii'}$.

A titre de variante, au lieu de prévoir un circuit de compensation 150 par pixel, les pixels du capteur peuvent être répartis en plusieurs sous-ensembles de pixels voisins, un même circuit de compensation 150 étant partagé par tous les pixels d'un même sous-ensemble et des circuits de compensation distincts étant prévus pour des sous-ensembles distincts.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, bien que l'on ait décrit ci-dessus des exemples de pixels et de fonctionnement basés sur une démodulation à K=4 phases du signal lumineux modulé, les modes de réalisations décrits ne se limitent pas à ce cas particulier. A titre de variante, la démodulation peut être réalisée sur tout autre nombre K de phases supérieur ou égal à 2. L'homme du métier saura adapter en conséquence les circuits des pixels, notamment pour acquérir un nombre d'échantillons différent de quatre à chaque période de modulation $T_{US}$ de la phase d'acquisition $T_{acq}$. Les formules de reconstruction des parties réelle et imaginaire du champ complexe du faisceau objet pourront en outre être adaptées en conséquence. On notera en particulier que, dans le cas d'une démodulation sur plus de quatre phases, on pourra, dans le même esprit que ce qui a été décrit en relation avec la figure 9, détecter l'ordre de franchissement du seuil TH par plus de deux échantillons, de façon à générer une valeur de phase quantifiée sur plus de trois bits.

Par ailleurs, bien que l'on ait décrit ci-dessus uniquement des exemples d'application à l'imagerie acoustooptique, notamment dans le domaine médical, la solution décrite ci-dessus de génération, au sein d'un pixel, d'un signal représentatif de la phase d'un signal lumineux modulé, par détection d'un ordre de franchissement d'un seuil de tension prédéterminé par une pluralité de capacités d'intégration du pixel, peut être utilisée dans d'autres applications. A titre d'exemple, des pixels du type décrit ci-dessus peuvent être utilisés pour des applications de mesure de distance par mesure de temps de vol d'un faisceau lumineux modulé, ou, plus généralement, pour toute application nécessitant une mesure de phase d'un signal lumineux modulé en intensité à une fréquence acoustique, par exemple une fréquence comprise entre 20 kHz et 50 MHz.

En outre, les modes de réalisation décrits ne se limitent pas aux exemples particuliers de réalisation du circuit d'intégration décrits en relation avec les figures 6 et 9. Dans ces exemples, les capacités Ci du circuit d'intégration sont des capacités discrètes reliées en parallèle d'un amplificateur opérationnel et commutées au moyen d'interrupteurs φi. A titre de variante, les modes de réalisation décrits peuvent être adaptés à une architecture de pixel du type décrit dans le document US10162048 (et en particulier avec les figures 4A à 7 de ce document), dont le contenu est considéré comme faisant partie intégrante de la présente description. Dans ce cas, la photodiode est une photodiode pincée (en anglais "pinned"). Chaque capacité d'intégration comprend une région semiconductrice dopée juxtaposée à la photodiode et séparée de la photodiode par une grille de transfert permettant d'ouvrir ou de fermer une barrière de potentiel séparant une région d'accumulation de charges de la photodiode de ladite région semiconductrice. Chaque capacité d'intégration est par exemple une diode pincée ayant par exemple une tension de pincement plus élevée que celle de la photodiode. Les transferts de charges de la photodiode vers les capacités d'intégration sont commandés par l'intermédiaire des grilles de transfert. Les grilles de transfert remplacent alors les interrupteurs φi des exemples des figures 6 et 9. L'adaptation de la solution proposée à ce type d'architecture est à la portée de la personne de métier à la lecture de la présente description. Comme dans les exemples des figures 6 et 9, une compensation en charges de l'offset lumineux peut être prévue à chaque basculement du comparateur 74. Cette compensation peut être réalisée au moyen d'un circuit d'injection de charges identique ou similaire au circuit 72 des figures 6 et 9. A titre de variante, la compensation de l'offset peut être mise en oeuvre en utilisant un circuit d'injection de charges adapté à injecter une même quantité de charges dans chaque capacité d'intégration, tel que décrit dans l'article intitulé "Compact Ambient Light Cancellation Design and Optimization for 3D Time-of-Flight Image Sensors" de Yibing M. Wang et al. (2013 International Image Sensor Workshop).

**Revendications**

1. Capteur pour l'acquisition d'un signal lumineux modulé à une fréquence acoustique, comportant une pluralité de pixels comprenant chacun :

   - une photodiode (52) ; et
   - un circuit d'intégration (70) configuré pour, à chaque période ($T_{US}$) du signal lumineux modulé, intégrer un photocourant délivré par la photodiode successivement dans K capacités (Ci), avec K entier supérieur ou égal à 2 ;

   le capteur étant **caractérisé en ce que** chaque pixel comprend en outre:

   - un circuit de détection de phase (80 ; 90) configuré pour détecter un ordre de franchissement d'un seuil prédéterminé de tension (TH) par les K capacités et générer, en fonction de l'ordre détecté, un signal ($V_{PH}$) représentatif de la phase du signal lumineux modulé.

2. Capteur selon la revendication 1, dans lequel, dans chaque pixel, le circuit de détection de phase (80) est adapté à détecter le rang de la première des K capacités (Ci) à franchir le seuil de tension (TH), et à affecter au signal ($V_{PH}$) représentatif de la phase du signal lumineux modulé une parmi K valeurs de phase prédéterminées en fonction du rang détecté.

3. Capteur selon la revendication 1, dans lequel, dans chaque pixel, le circuit de détection de phase (90) est adapté à détecter le rang des P premières capacités (Ci) à franchir le seuil de tension (TH) et l'ordre de franchissement du seuil de tension (TH) par lesdites P premières capacités (Ci), avec P entier supérieur ou égal à 2 et inférieur à K, et à affecter au signal lumineux modulé une parmi $K^P$ valeurs de phase prédéterminées en fonction des rangs et de l'ordre détectés.

4. Capteur selon l'une quelconque des revendications 1 à 3, dans lequel K=4.

5. Capteur selon l'une quelconque des revendications 1 à 4, dans lequel chaque pixel comprend en outre un circuit d'injection de charges (72) commandé pour, à la fin de chaque période ($T_{US}$) du signal lumineux modulé au cours de laquelle au moins l'une des K capacités (Ci) franchit le seuil de tension (TH), injecter une même contre charge ($\Delta q$) dans chacune des K capacités (Ci) du circuit d'intégration (70).

6. Capteur selon l'une quelconque des revendications 1 à 5, dans lequel, dans chaque pixel, à chaque période de modulation ($T_{US}$) le photocourant est intégré successivement dans les K capacités (Ci) dans un ordre sélectionné en fonction d'un signal binaire représentatif d'une séquence de sauts de phase appliquée à un signal de modulation du signal lumineux.

7. Capteur selon l'une quelconque des revendications 1 à 6, dans lequel chaque pixel comprend un dispositif de contrôle de phase (54', 60, 62, 64, 66) adapté à réémettre une partie de faisceau lumineux modulé reçu par le pixel, en introduisant dans le faisceau réémis un déphasage fonction de la valeur du signal ($V_{PH}$) représentatif de la phase du signal lumineux modulé, généré par le circuit de détection de phase du pixel.

8. Capteur selon la revendication 7, dans lequel, dans chaque pixel, le dispositif de contrôle de phase comprend une couche de cristaux liquides (62) disposée entre des première (54') et deuxième (66) électrodes.

9. Capteur selon la revendication 8, dans lequel, dans chaque pixel, la première électrode (54') du dispositif de contrôle de phase est connectée à un noeud de fourniture du signal ($V_{PH}$) représentatif de la phase du signal lumineux modulé, généré par le circuit de détection de phase du pixel.

10. Capteur selon l'une quelconque des revendications 1 à 9, dans lequel, dans chaque pixel, le signal ($V_{PH}$) représentatif de la phase du signal lumineux modulé est adapté, en fonction d'un signal de calibration (calib0, calib1), par un circuit de compensation (150).

**11.** Capteur selon la revendication 10, dans lequel chaque pixel comporte son propre circuit de compensation (150).

**12.** Capteur selon la revendication 10, dans lequel les pixels du capteur sont répartis en plusieurs sous-ensembles de pixels voisins, un même circuit de compensation (150) étant partagé par tous les pixels d'un même sous-ensemble et des circuits de compensation (150) distincts étant prévus pour des sous-ensembles distincts.

**13.** Capteur selon l'une quelconque des revendications 1 à 12, dans lequel, dans chaque pixel, la photodiode (52) est une photodiode pincée, et chacune des K capacités (Ci) comprend une région conductrice dopée juxtaposée à la photodiode, et séparée de la photodiode par une grille de transfert.

**Patentansprüche**

**1.** Sensor zur Erfassung eines mit einer akustischen Frequenz modulierten optischen Signals, mit einer Vielzahl von Pixeln, die jeweils Folgendes aufweisen:

- eine Fotodiode (52); und
- eine Integrationsschaltung (70), die konfiguriert ist, um in jeder Periode (Tus) des modulierten optischen Signals einen von der Fotodiode gelieferten Fotostrom nacheinander in K Kondensatoren (Ci) zu integrieren, wobei K eine ganze Zahl größer oder gleich 2 ist;

wobei der Sensor **dadurch gekennzeichnet ist, dass** jedes Pixel ferner Folgendes aufweist:

- eine Phasendetektionsschaltung (80; 90), die konfiguriert ist zum Detektieren einer Reihenfolge beim Überschreiten einer vorbestimmten Spannungsschwelle (TH) durch die K Kondensatoren und zum Erzeugen, entsprechend der detektierten Reihenfolge, eines Signals ($V_{PH}$), das für die Phase des modulierten optischen Signals repräsentativ ist.

**2.** Sensor nach Anspruch 1, wobei die Phasendetektionsschaltung (80) in jedem Pixel in der Lage ist, den Rang des ersten der K Kondensatoren (Ci) zu detektieren, der die Spannungsschwelle (TH) überschritten hat, und dem Signal ($V_{PH}$), das die Phase des modulierten optischen Signals repräsentiert, einen von K vorbestimmten Phasenwerten gemäß dem detektierten Rang zuzuordnen.

**3.** Sensor nach Anspruch 1, wobei die Phasendetektionsschaltung (90) in jedem Pixel in der Lage ist, den Rang der ersten P Kondensatoren (Ci) zu detektieren, die die Spannungsschwelle (TH) überschritten haben, und die Reihenfolge der Überschreitung der Spannungsschwelle (TH) durch die P ersten Kondensatoren (Ci) zu detektieren, wobei P eine ganze Zahl größer oder gleich 2 und kleiner als K ist, und dem modulierten optischen Signal einen von $K^P$ vorbestimmten Phasenwerten gemäß den detektierten Rängen und der Reihenfolge zuzuordnen.

**4.** Sensor nach einem der Ansprüche 1 bis 3, wobei K = 4 ist.

**5.** Sensor nach einem der Ansprüche 1 bis 4, wobei jedes Pixel ferner eine Ladungsinjektionsschaltung (72) aufweist, die gesteuert wird, um am Ende jeder Periode (Tus) des modulierten optischen Signals, während der wenigstens einer der K Kondensatoren (Ci) die Spannungsschwelle (TH) überschreitet, eine gleiche Gegenladung ($\Delta q$) in jeden der K Kondensatoren (Ci) der Integrationsschaltung (70) zu injizieren.

**6.** Sensor nach einem der Ansprüche 1 bis 5, wobei in jedem Pixel in jeder Modulationsperiode (Tus) der Fotostrom nacheinander in die K Kondensatoren (Ci) in einer Reihenfolge integriert wird, die gemäß einem binären Signal ausgewählt wird, das für eine Phasensprungsequenz repräsentativ ist, die an ein Signal zur Modulation des optischen Signals angelegt wird.

**7.** Sensor nach einem der Ansprüche 1 bis 6, wobei jedes Pixel eine Phasensteuervorrichtung (54', 60, 62, 64, 66) aufweist, die in der Lage ist, einen Teil des modulierten Lichtstrahls, der von dem Pixel empfangen wird, wieder zu emittieren, indem in den wieder emittierten Lichtstrahl eine Phasenverschiebung eingebracht wird, die eine Funktion des Werts des Signals ($V_{PH}$) ist, der repräsentativ für die Phase des modulierten optischen Signals ist und von der Pixel- Phasendetektionsschaltung erzeugt wird.

8. Sensor nach Anspruch 7, wobei die Phasensteuervorrichtung in jedem Pixel eine Flüssigkristallschicht (62) aufweist, die zwischen ersten (54') und zweiten (66) Elektroden angeordnet ist.

9. Sensor nach Anspruch 8, wobei in jedem Pixel die erste Elektrode (54') der Phasensteuervorrichtung mit einem Knotenpunkt zur Ausgabe des Signals ($V_{PH}$), das repräsentativ für die Phase des modulierten optischen Signals ist, und von der Pixel-Phasendetektionsschaltung erzeugt wird, verbunden ist.

10. Sensor nach einem der Ansprüche 1 bis 9, wobei in jedem Pixel das für die Phase des modulierten optischen Signals repräsentative Signal ($V_{PH}$) gemäß einem Kalibrierungssignal (calib0, calib1) durch eine Kompensationsschaltung (150) angepasst wird.

11. Sensor nach Anspruch 10, wobei jedes Pixel seine eigene Kompensationsschaltung (150) umfasst.

12. Sensor nach Anspruch 10, wobei die Sensorpixel in eine Vielzahl von Unterbaugruppen benachbarter Pixel verteilt sind, wobei eine Kompensationsschaltung (150) von allen Pixeln einer gleichen Unterbaugruppe gemeinsam genutzt wird und unterschiedliche Kompensationsschaltungen (150) für unterschiedliche Unterbaugruppen vorgesehen sind.

13. Sensor nach einem der Ansprüche 1 bis 12, wobei in jedem Pixel die Photodiode (52) eine gepinnte Photodiode ist und jeder der K-Kondensatoren (Ci) einen dotierten leitenden Bereich aufweist, der neben der Photodiode liegt und von der Photodiode durch ein Transfergate getrennt ist.


**Claims**

1. A sensor for the acquisition of an optical signal modulated at an acoustic frequency, comprising a plurality of pixels, each comprising:

   - a photodiode (52); and
   - an integration circuit (70) configured to, at each period ($T_{US}$) of the modulated optical signal, integrate a photocurrent delivered by the photodiode successively into K capacitors (Ci), K being an integer greater than or equal to 2;

   the sensor being **characterized in that** each pixel further comprises:

   - a phase detection circuit (80; 90) configured to detect an order in the crossing of a predetermined voltage threshold (TH) by the K capacitors and to generate, according to the detected order, a signal ($V_{PH}$) representative of the phase of the modulated optical signal.

2. The sensor according to claim 1, wherein, in each pixel, the phase detection circuit (80) is capable of detecting the rank of the first one of the K capacitors (Ci) to have crossed the voltage threshold (TH) and of assigning to the signal ($V_{PH}$) representative of the phase of the modulated optical signal one among K predetermined phase values according to the detected rank.

3. The sensor according to claim 1, wherein, in each pixel, the phase detection circuit (90) is capable of detecting the rank of the first P capacitors (Ci) to have crossed the voltage threshold (TH) and the order of the crossing of the voltage threshold (TH) by said P first capacitors (Ci), P being an integer greater than or equal to 2 and smaller than K, and of assigning to the modulated optical signal one among $K^P$ predetermined phase values according to the detected ranks and order.

4. The sensor according to any of claims 1 to 3, wherein K = 4.

5. The sensor according to any of claims 1 to 4, wherein each pixel further comprises a charge injection circuit (72) controlled to, at the end of each period ($T_{US}$) of the modulated optical signal during which at least one of the K capacitors (Ci) crosses the voltage threshold (TH), inject a same counter-charge ($\Delta q$) into each of the K capacitors (Ci) of the integration circuit (70).

6. The sensor according to any of claims 1 to 5, wherein, in each pixel, at each modulation period ($T_{US}$), the photocurrent is successively integrated into the K capacitors (Ci) in an order selected according to a binary signal representative of a phase jump sequence applied to a signal for modulating the optical signal.

7. The sensor according to any of claims 1 to 6, wherein each pixel comprises a phase control device (54', 60, 62, 64, 66) capable of reemitting a portion of the modulated light beam received by the pixel, by introducing into the reemitted light beam a phase shift which is a function of the value of the signal ($V_{PH}$) representative of the phase of the modulated optical signal, generated by the pixel phase detection circuit.

8. The sensor according to claim 7, wherein, in each pixel, the phase control device comprises a liquid crystal layer (62) arranged between first (54') and second (66) electrodes.

9. The sensor according to claim 8, wherein, in each pixel, the first electrode (54') of the phase control device is connected to a node for delivering the signal ($V_{PH}$) representative of the phase of the modulated optical signal, generated by the pixel phase detection circuit.

10. The sensor according to any of claims 1 to 9, wherein, in each pixel, the signal ($V_{PH}$) representative of the phase of the modulated optical signal is adapted, according to a calibration signal (calib0, calib1), by a compensation circuit (150).

11. The sensor according to claim 10, wherein each pixel comprises its own compensation circuit (150).

12. The sensor according to claim 10, wherein the sensor pixels are distributed into a plurality of sub-assemblies of neighboring pixels, a same compensation circuit (150) being shared by all the pixels of a same sub-assembly and distinct compensation circuits (150) being provided for distinct sub-assemblies.

13. The sensor according to any of claims 1 to 12, wherein, in each pixel, the photodiode (52) is a pinned photodiodes, and each of the K capacitors ($C_i$) comprises a doped conductive region juxtaposed to the photodiode, and separated from the photodiode by a transfer gate.

**Fig 1**

**Fig 2**

**Fig 3**

**Fig 4**

**Fig 5**

Fig 6

Fig 9

Fig 7

Fig 8

Fig 10

## RÉFÉRENCES CITÉES DANS LA DESCRIPTION

**Documents brevets cités dans la description**

- US 10162048 B

**Littérature non-brevet citée dans la description**

- **PITTER M. C. et al.** Phase-sensitive CMOS photo-circuit array for modulated thermoreflectance measurements. *ELECTRONICS LETTERS,* 04 Septembre 2003, vol. 39 (18), 1339-1340

- **YIBING M. WANG et al.** International Image Sensor Workshop. *Compact Ambient Light Cancellation Design and Optimization for 3D Time-of-Flight Image Sensors,* 2013